# EUROPEAN PATENT APPLICATION

(11) **EP 3 261 336 A2**
(43) Date of publication of application: **27.12.2017**
(21) Application number: 17172954.4
(22) Date of filing: 25.05.2017
(51) Int. Cl.: H04N 5/44, H04N 21/422, H04N 21/436, H04N 21/488, G08C 17/00

(54) **DISPLAY APPARATUS FOR RECEIVING REMOTE CONTROL SIGNAL AND OUTPUTTING CONVERTED REMOTE CONTROL SIGNAL, AND CONTROL METHOD THEREOF**

(30) Priority: 21.06.2016 KR 20160077633
(71) Applicant: Samsung Electronics Co., Ltd., Gyeonggi-do 16677 (KR)
(72) Inventor: KIM, Kwan-young, Suwon-si 16509 (KR); KIM, Dong-wook, Suwon-si 16413 (KR); SEO, Je-hwan, Daegu 42213 (KR); YOON, Seung-il, Yongin-si 16937 (KR); HUR, Jae-myung, Seongnam-si 13618 (KR)
(74) Representative: Appleyard Lees IP LLP

(57) **Abstract**

Disclosed is a display apparatus (1) capable of receiving a remote control signal from a remote controller (10a-10n) for a different apparatus (2a-2n) and outputting a converted remote control signal and a control method thereof, the display apparatus including: a display (203) configured to display an image; a communicator (205) comprising communication circuitry; a signal receiver (201) configured to receive a remote control signal from among a plurality of remote controllers (10a-10n) respectively corresponding to a plurality of external apparatuses (2a-2n); and a controller (200) configured to perform a function corresponding to an image displayed on the display in response to a command included in the received remote control signal, or to control the communicator to transmit the command to an external apparatus (2a-2n) selected corresponding to the image displayed on the display from among the plurality of external apparatuses (2a-2n). Thus, the display apparatus (1) receives a remote control signal from a remote controller (10a-10n) for controlling an external apparatus (2a-2n), and uses the received remote control signal to directly perform a function or transmit a command to an apparatus desired to be controlled by a user, thereby allowing the user to easily use the remote controller.

## Description

### BACKGROUND

### 1. Field

The present disclosure relates generally to a display apparatus capable of receiving a remote control signal from a remote controller for a different apparatus and outputting a converted remote control signal and a control method thereof, and for example, to a display apparatus and a control method thereof, in which there is no need for finding a remote controller designated for an electronic apparatus desired to be controlled by a user and thus any available remote controller can be easily used in controlling the display apparatus or another connected external apparatus.

### 2. Description of Related Art

On the strength of development of electronic and communication technology, various kinds of electronic apparatuses have been developed and come into wide use, and thus homes and businesses generally possess many kinds of electronic apparatuses. Further, a remote controller is used for remotely and easily controlling the electronic apparatus while the electronic apparatus is used. Therefore, the number of remote controllers corresponding to the apparatuses is increased as more kinds of apparatuses are used by a user.

If there are many remote controllers, it may take much time for a user to find a remote controller matching with an electronic apparatus to be controlled. Further, if the remote controller is lost, it is impossible to remotely control the matching electronic apparatus.

### SUMMARY

An aspect of one or more example embodiments is to receive a remote control signal from a remote controller for controlling an external apparatus, and use the received remote control signal to directly perform a function or to transmit a command to an apparatus desired to be controlled by a user, thereby allowing the user to easily use the remote controller.

In accordance with an example embodiment, a display apparatus is provided, the display apparatus including: a display configured to display an image; a communicator comprising communication circuitry; a signal receiver configured to receive a remote control signal from at least one of a plurality of remote controllers respectively corresponding to a plurality of external apparatuses; and a controller configured to perform a function corresponding to an image displayed on the display in response to a command included in the received remote control signal, or to control the communicator to transmit the command to an external apparatus selected corresponding to the image displayed on the display from among the plurality of external apparatuses.

The controller may generate a first remote control signal including the command to match with the selected external apparatus, and controls the communicator to output the generated first remote control signal.

The display apparatus may further include a storage configured to store a plurality of decoding types, and the controller may determine a decoding type corresponding to the remote control signal from among the plurality of decoding types by analyzing a characteristic of the remote control signal.

The controller may control the display to display a user interface (Ul) allowing a user to transmit a remote control signal again if a plurality of decoding types are detected corresponding to the received remote control signal.

If a decoding type corresponding to the received remote control signal is not detected among the plurality of decoding types, the controller may control the communicator to transmit the characteristic of the analyzed remote control signal to an external server and determine a decoding type received from the external server as a decoding type corresponding to the received remote control signal.

If a decoding type corresponding to the received remote control signal is not detected among the plurality of decoding types, the controller may control the display to display a user interface (UI) for receiving a user's input of information about the kinds of remote controller.

The controller may perform a function corresponding to a command included in the remote control signal based on a predetermined condition, or control the communicator to transmit the command to an external apparatus selected based on the predetermined condition from among the plurality of external apparatuses.

The predetermined condition may include current state information about a function currently being performed in the display apparatus, information about an external apparatus that is transmitting data to the display apparatus, a pointing direction of the remote controller, a period for which the remote control signal is received, the number of times by which the remote control signal is received for a predetermined period of time, the kind of remote controller, or at least one among functions to be performed.

The controller may control the display to display a user interface (UI) allowing a user to set up the predetermined condition.

Based on receiving the remote control signal, the controller may control the display to display a user interface (UI) allowing a user to select a subject of performing the function, and perform the function based on the user's input made through the UI or control the communicator to transmit the command to at least one external apparatus selected through the UI.

The controller may control the display to display guide information related to a command of the remote controller.

The controller may perform a function corresponding to the command based on surrounding environmental information, or control the communicator to transmit the command to at least one external apparatus selected based on the surrounding environmental information from among the plurality of external apparatuses.

The surrounding environmental information may include at least one among current operation information about at least some of the plurality of external apparatuses, respective positions of the plurality of remote controllers, and ambient temperature, sound and/or smell of the display apparatus.

In accordance with another example embodiment, method of controlling a display apparatus is provided, the method including: displaying an image; receiving a remote control signal from at least one from among a plurality of remote controllers respectively corresponding to a plurality of external apparatuses; and performing a function corresponding to the displayed image in response to a command included in the received remote control signal, or transmitting the command to an external apparatus selected corresponding to the displayed image among the plurality of external apparatuses.

The transmitting the command to an external apparatus selected corresponding to the displayed image among the plurality of external apparatuses may include: generating a first remote control signal including the command to match with the selected external apparatus; and outputting the generated first remote control signal.

The method may further include: storing a plurality of decoding types; and determining a decoding type corresponding to the remote control signal from among the plurality of decoding types by analyzing a characteristic of the remote control signal.

The determining the decoding type may include: displaying a user interface (UI) allowing a user to transmit a remote control signal again if a plurality of decoding types are detected corresponding to the received remote control signal.

The determining the decoding type may include: displaying a user interface (UI) for receiving a user's input of information about the kinds of remote controller if a decoding type corresponding to the received remote control signal is not detected among the plurality of decoding types.

The control method may further include: displaying a user interface (UI) allowing a user to select a subject of performing the function based on receiving the remote control signal; and performing the function based on the user's input made through the UI or transmitting the command to the at least one external apparatus selected through the UI.

### BRIEF DESCRIPTION OF THE DRAWINGS

The above and/or other aspects, features and attendant advantages of the present disclosure will become apparent and more readily appreciated from the following detailed description, taken in conjunction with the accompanying drawings, in which like reference numerals refer to like elements, and wherein:
FIG. 1 is a diagram illustrating an example of an electronic apparatus system including a display apparatus according to an example embodiment;
FIG. 2 is a block diagram illustrating an example display apparatus according to an example embodiment;
FIG. 3 is a diagram illustrating an example remote control signal output from a remote controller;
FIG. 4 is a block diagram illustrating example operations of a display apparatus according to an example embodiment;
FIG. 5 is a diagram illustrating an example of a user interface (UI) displayed for allowing a user to input a remote control signal again according to an example embodiment;
FIG. 6 is a diagram illustrating an example of a Ul displayed for allowing a user to input information about a remote controller according to an example embodiment;
FIG. 7 is a diagram illustrating an example of operations of a display apparatus that transmits a command to an external apparatus selected based on an image displayed according to an example embodiment;
FIG. 8 is a diagram illustrating an example of operations of a display apparatus that transmits a command to an external apparatus selected based on a predetermined condition according to an example embodiment;
FIG. 9 is a diagram illustrating an example of a display apparatus that performs operations based on operations of an external apparatus that receives a remote control signal according to an example embodiment;
FIG. 10 is a diagram illustrating an example of operations of a display apparatus that operates when receiving a remote control signal from a remote controller regardless of functions of the display apparatus according to an example embodiment;
FIG. 11 is a diagram illustrating an example of operations of a display apparatus that provides guide information to a user by analyzing a remote control signal according to an example embodiment;
FIG. 12 is a diagram illustrating an example of operations of a display apparatus that transmits a command to an external apparatus selected based on surrounding environmental information according to an example embodiment;
FIG. 13 is a diagram illustrating an example of operation of a display apparatus that transmits a command to an external apparatus selected based on surrounding environmental information according to an example embodiment; and
FIG. 14 is a flowchart illustrating an example method of operating a display apparatus according to an example embodiment.

### DETAILED DESCRIPTION

Below, various example embodiments will be described in greater detail with reference to accompanying drawings. However, detailed descriptions about publicly known functions or elements, which may cloud the gist of the present disclosure, may be omitted in the following description and accompanying drawings. If possible, like numerals refer to like elements throughout the accompanying drawings.

Terms or words used in the present disclosure and the appended claims set forth herein shall be construed as not typical or lexical acceptation but a meaning matching with the present disclosure on the principle that the disclosure can properly define terms for the best way to describe the various embodiments. Therefore, embodiments described in the present disclosure and features illustrated in the accompanying drawings are nothing but preferable examples without representing all the concepts, and it is thus appreciated that various equivalents and modifications can be made as alternatives at the time of the present disclosure.

In the accompanying drawings, some elements are exaggerated, omitted or schematically illustrated, in which the size of each element does not reflect the real size thereof. Therefore, the present disclosure is not limited by the relative sizes or spaces illustrated in the accompanying drawings.

Throughout the disclosure, if a certain element 'includes' an additional element, it means that the certain element does not exclude the other elements but further includes the additional element unless otherwise noted. Further, a '∼ portion' used in this disclosure refers to a field-programmable gate array (FPGA) or the like software, or an application-specific integrated circuit (ASIC) or the like hardware element, in which the '∼ portion' is configured to perform a specific function. However, the '∼ portion' is not restrictively construed as software or hardware. The '∼ portion' may be configured in a storage medium to be addressed, or may be configured to reproduce one or more processors. For example, the '∼ portion' may include software elements, object-oriented software elements, class elements, task elements and the like elements, and may include processes, functions, attributes, procedures, subroutines, segments of a program code, drivers, firmware, a microcode, a circuit, data, a database, data structures, tables, arrays and variables. The functions provided in the elements and '∼ portions' may be combined into fewer elements and '∼ portions', or may be further divided into more elements and '∼ portions.'

Below, example embodiments will be described in detail with reference to accompanying drawings so as to be easily understood by a person having an ordinary skill in the art. The present disclosure may be embodied in many different forms, and not limited to the following example embodiments. Portions unrelated to the descriptions may be omitted for clarity, and like numerals refer to like elements throughout.

In the present disclosure, a display apparatus may be configured to wirelessly receive power from an external apparatus and provide an image based on a received image signal.

In the present disclosure, the external apparatus may be configured to receive external power by a wire, and wirelessly supply power to the display apparatus by the publicly known wireless power transmission method, which may be achieved by an external wireless power supply module involved in the display apparatus. Further, the external apparatus may be configured to receive an image signal and provide the received image signal to the display apparatus, in which the image signal may be transmitted through Bluetooth or the like communication or may be embedded in the power to be transmitted.

In the present disclosure, the magnetic induction method may refer, for example, to a method of transmitting power to a magnetically coupled electronic apparatus through electromagnetic induction between coils, and the magnetic resonance method refers to a method of using magnetic moment in an electromagnetic field to transmit power to an electronic apparatus having a unique frequency. Further, the electromagnetic-wave method refers to a method of transmitting power in the form of electromagnetic waves through an antenna or the like.

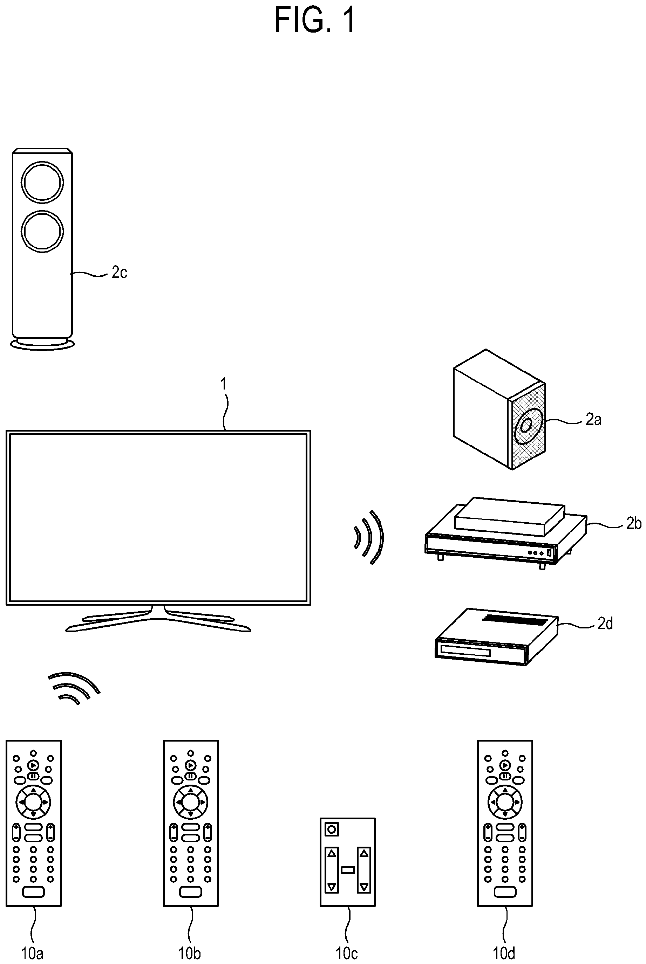

FIG. 1 is a diagram illustrating an example of an electronic apparatus system including a display apparatus according to an example embodiment.

The electronic apparatus system may include a display apparatus 1 for displaying an image, a plurality of external apparatuses 2a, 2b, 2c, 2d arranged to communicate with the display apparatus 1, and a plurality of remote controllers 10a, 10b, 10c, 10d for remotely controlling the respective external apparatuses 2a-2d.

At least some among the plurality of external apparatuses 2a-2d may process a video signal received from the outside and provide the processed signal to the display apparatus 1. The plurality of external apparatuses 2a-2d may provide an image from a readable recording medium to the display apparatus 1. To this end, the external apparatuses 2a-2d may include, for example, and without limitation, one or more among a set-top box, a digital versatile disc (DVD) player, and a Blu ray disc (BD) player. Further, the external apparatuses 2a-2d may include, for example, and without limitation, an external loudspeaker or the like for receiving an audio signal from the display apparatus 1 and outputting a sound. In addition, the external apparatuses 2a-2d may include, for example, and without limitation, various electronic apparatuses such as an air conditioner, a refrigerator, an external sensor, or the like using the display apparatus 1 as a hub for Internet of things (IoT).

The plurality of remote controllers 10a-10d generate a first remote control signal based on a command, which is input by a user to perform a corresponding function, and outputs the first remote control signal to the outside. Each of the external apparatuses 2a-2d receives the first remote control signal output from the corresponding remote controller 10a-10d, and performs a function based on the command included in the first remote control signal. Since the first remote control signal is differently set according to the external apparatuses 2a-2d, the external apparatuses 2a-2d are configured to respectively receive only the first remote control signal output from the matching remote controllers 10a-10d. However, the display apparatus 1 according to an example embodiment may be configured to receive the first remote control signal output from not only the remote controller matching with the display apparatus 1 but also the remote controllers 10a-10d respectively matching with the plurality of external apparatuses 2a-2d.

The display apparatus 1 is configured to display an image based on a signal received from the outside. As described above, some among the plurality of external apparatuses 2a-2d provide video sources to the display apparatus 1. If receiving the first remote control signal, the display apparatus 1 is configured to select an apparatus corresponding to the command. The display apparatus 1 is configured to perform a function corresponding to a command involved (e.g., included) in the first remote control signal based on the selection, or to generate a second remote control signal including the command and transmit the generated second remote control signal to at least one external apparatus 2a-2d selected from among the plurality of external apparatuses 2a-2d. The apparatus corresponding to the command is selected by the display apparatus 1 as an apparatus most suitable for performing a function corresponding to the command involved in the first remote control signal, and refers to the display apparatus 1 and at least some selected among the plurality of external apparatuses 2a-2d communicable with the display apparatus 1.

The display apparatus 1 includes at least one from among a television (TV), a large format display (LFD), a liquid crystal display (LCD), a thin film transistor liquid crystal display (TFT LCD), an organic light-emitting diode (OLED), a flexible display, a field emission display (FED), and a three-dimensional (3D) display, or the like, but is not limited thereto.

According to another example embodiment, the display apparatus 1 may include at least one among a desktop computer capable of communication, a laptop computer, a tablet personal computer (PC), a wireless phone, a mobile phone a smart phone, an E-book reader, a portable multimedia player (PMP), a portable game console, a navigation device, a digital camera, a digital multimedia broadcasting (DMB) player, a digital audio recorder, a digital audio player, a digital picture recorder, a digital picture player, a digital video recorder, and a digital video player, or the like, but is not limited thereto.

FIG. 1 illustrates only the remote controllers 10a-10d corresponding to the external apparatuses 2a-2d, but this is not to be understood as limiting the present disclosure. The display apparatus 1 may be configured to receive the first remote control signal from not only the remote controllers 10a-10d matching with the external apparatuses 2a-2d but also the remote controller matching with the display apparatus 1, select the apparatus corresponding to the command included in the received first remote control signal, and perform a function directly based on the selection or generates and transmits the second remote control signal including the command to at least some among the selected external apparatuses 2a-2d.

Below, operations of the display apparatus 1 according to an example embodiment will be described with reference to accompanying drawings.

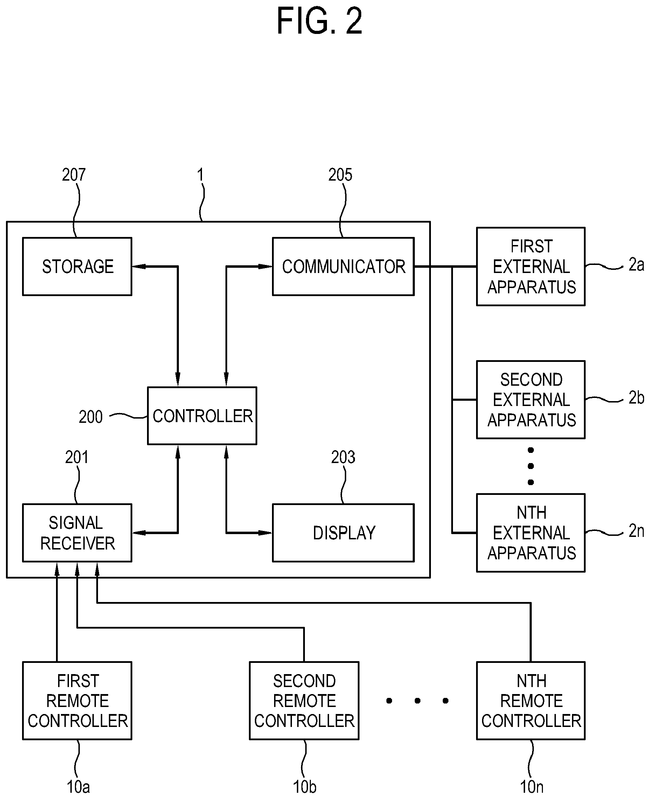

FIG. 2 is a block diagram illustrating an example display apparatus according to an example embodiment.

The display apparatus 1 according to an example embodiment selects an apparatus corresponding to a command involved (e.g., included) in a first remote control signal based on an image being displayed, if the first remote control signal is received from at least one among a plurality of remote controllers 10a-10n respectively corresponding to a plurality of external apparatuses 2a-2n. Further, the display apparatus 1 performs a function in response to the command based on the selection, or generates and transmits the second remote control signal including the command to the selected external apparatuses 2a-2n.

To perform the foregoing function, the display apparatus 1 includes a signal receiver 201, a display 203, a communicator (e.g., including communication circuitry) 205, a storage 207 and a controller (e.g., including processing circuitry) 200.

The signal receiver 201 is configured to receive the first remote control signal from the remote controllers 10a-10n. Based on receiving a user's command, the remote controllers 10a-10n transmit the first remote control signal including the input command. If the external apparatuses 2a-2n receive the mismatched first remote control signal, a problem of performing an operation unexpected by a user may arise. To prevent and/or avoid such an unexpected operation, the external apparatuses 2a-2n are configured to receive only the matching first remote control signal. However, the signal receiver 201 according to an example embodiment may be provided as, for example, and without limitation, a universal infrared (IR) signal receiver to receive the first remote control signal output from the remote controllers 10a-10n of all the external apparatuses 2a-2n.

The communicator 205 may include various communication circuitry and is configured to communicate with the external apparatuses 2a-2n. The communicator 205 is configured to transmit the second remote control signal including the command to the external apparatuses 2a-2n. If the display apparatus 1 serves as a hub in the Internet of Things (loT), the communicator 205 may receive environmental information sensed from an external sensor. Further, the display apparatus 1 may be configured to transmit an operation command for operating based on a user's command or the sensed environmental information to the external apparatuses 2a-2n.

The communicator 205 may be configured to connect with the external apparatuses 2a-2n, a network or the like, and include a plurality of connection ports according to various standards such as high definition multimedia interface (HDMI), a universal serial bus (USB), etc. The communicator 205 may also perform wired communication with a plurality of servers through a wired local area network (LAN). Further, the communication performed by the communicator 205 may include wireless communication. The communicator 205 may include various wireless communication circuitry, such as, for example, and without limitation, a radio frequency (RF) circuit for transmitting and receiving an RF signal to perform the wired communication, and perform one or more communications among wireless fidelity (Wi-Fi), Bluetooth, ZigBee, ultra-wide band (UWB), wireless USB, and near field communication (NFC).

The communicator 205 may be configured to output the second remote control signal to the external apparatuses 2a-2n selected for transmitting the command. The second remote control signal may also include an IR signal. The communicator 205 may include, for example, an IR blaster configured to output an IR signal generated in the controller 200 so as to match with the external apparatuses 2a-2n.

The display 203 is configured to display an image based on an image signal. The image signal may be received from a broadcasting station or the external apparatuses 2a-2n. The display 203 may be configured to display a user interface (UI). The display 203 may include, for example, and without limitation, a display panel for displaying an image thereon, a backlight unit as a light source for illuminating the display panel, and a driver for supplying power to and driving the display panel and the light source. If the display panel cannot emit light by itself, an image is displayable only when the display panel is illuminated with light emitted from the light source. On the other hand, if the display panel can emit light by itself, the driving circuit is configured to supply power to self-emissive devices of the display panel.

The storage 207 is configured to store a variety of data in the display apparatus 1. For example, the storage 207 may store a plurality of decoding types for decoding the first remote control signal. The storage 207 may be provided as a nonvolatile memory (e.g., a writable read only memory (ROM) that retains data even though the display apparatus 1 is turned off, and reflects changes. For example, the storage 207 may be provided as one of a flash memory, an erasable programmable read only memory (EPROM) or an electrically erasable programmable read only memory (EEPROM).

The storage 207 may also include a volatile memory that maintains data while the display apparatus 1 is turned on. For example, the storage 207 may be provided as either of a dynamic random access memory (DRAM) or a static random access memory (SRAM), which can write and read information and of which reading or writhing is very faster than the nonvolatile memory.

The controller 200 may include various processing circuitry and is configured to control general operations of the display apparatus 1. In more detail, the controller 200 selects an apparatus corresponding to a command based on a displayed image if receiving the first remote control signal. The controller 200 may be configured to perform a function corresponding to an image displayed on the display 203 in accordance with the command included in the first remote control signal received based on the selection, or control the communicator 205 to transmit the second remote control signal including the command to the selected external apparatus.

For example, the controller 200 may be configured to directly perform the function corresponding to the command included in the remote control signal if an image is being displayed based on an image signal received from a broadcasting station or the like or based on implementation of an application stored in the storage 207. The controller 200 may be configured to transmit the command to the external apparatus, which are transmitting the image, if the image processed in and transmitted from the external apparatus such as the set-top box, the DVD player, etc. is being displayed on the display 203.

If a user makes an input of a command through one among the plurality of remote controllers 10a-10n, the corresponding remote controller 10a may generate and output the first remote control signal involving the command. The signal receiver 201 receives the output first remote control signal, and the controller 200 detects the command included in the received first remote control signal. Then, the controller 200 selects an apparatus capable of a function corresponding to the command on the displayed image as an apparatus matching with the command. A user inputs a command to the remote controller 10a so that a function can be performed with respect to a currently displayed image. Therefore, if the display apparatus 1 is suitable for a user's intention and determined as an apparatus corresponding to the command, the controller 200 directly performs the function corresponding to the command. Further, if one among the plurality of external apparatuses 2a-2n is determined as an apparatus suitable for a user's intention and corresponding to the command, the controller 200 generates a second remote control signal including the command to match with the selected external apparatus 2a. Further, the controller 200 controls the communicator 205 to transmit the generated second remote control signal to the outside.

The controller 200 analyzes the received first remote control signal, and determines one among a plurality of decoding types stored in the storage 207 as a decoding type of the first remote control signal based on the analysis. If the decoding type of the first remote control signal is determined, the controller 200 decodes the first remote control signal based on the determined decoding type and detects the included command. If a plurality of decoding types are detected corresponding to the first remote control signal, the controller 200 may be configured to receive a third remote control signal including another command from the remote controller 10a transmitting to the first remote control signal in order to determine the decoding type. The controller 200 analyzes the third remote control signal, and determines the decoding types of the first and third remote control signals based on the analyzed characteristics of the first and third remote control signals. To receive the third remote control signal, the controller 200 may control the display 203 to display a UI selectable by a user for transmitting the remote control signal again if there are a plurality of decoding types corresponding to the received first remote control signal.

According to another example embodiment, if it is determined that there are no decoding type corresponding to the analyzed first remote control signal among the decoding types stored in the storage 207, the controller 200 may control the communicator 205 to transmit the analyzed characteristics of the first remote control signal to an external server, and determine the decoding type received from the external server as the decoding type of the received first remote control signal.

The controller 200 may control the display 203 to offer a Ul for allowing a user to input information about the remote controllers 10a-10n, such as a manufacturer, a serial number, etc. of the remote controllers 10a-10n. The controller 200 is configured to receive a user's input of the information about the remote controllers 10a-10n and efficiently determine the decoding type of the first remote control signal of the corresponding remote controller 10a.

The controller 200 may be further configured to select an apparatus corresponding to a command based on a predetermined condition. This condition may include a condition about at least one among a current state of the display apparatus 1 such as a function performed in the display apparatus 1, etc.; data about the external apparatus transmitting an image to the display apparatus 1; direction in which the remote controller is oriented; a period during which the remote control signal is received; the number of times by which the remote control signal is received during a predetermined period of time; and the kind of remote controller.

For example, if the display apparatus 1 is performing a function corresponding to a stored application even though a source of a displayed image is one of the external apparatuses 2a-2n, the controller 200 may select the display apparatus 1 as the apparatus corresponding to the command.

As another example, the controller 200 may detect change in an image signal received from one of the external apparatuses 2a-2n, and operate based on this change. For example, the display apparatus 1 and an external apparatus capable of receiving the first remote control signal may simultaneously receive the first remote control signal involving a command for volume control. The external apparatus receives the first remote control signal, controls the volume of the image in response to the command, and transmits an image, the volume of which is controlled, to the display apparatus 1. If the volume-controlled image signal is received, the controller 200 does not generate the second remote control signal involving the command so that the same function is not repetitively performed, but control the display 203 to display a Ul for informing a user that the volume is controlled.

As still another example, if information for informing that the command involved in the first remote control signal is received from the external apparatus 2a, the controller 200 may be configured to display a UI for informing a user that the function is performed based on the received information.

As yet another example, the controller 200 may be configured to select an apparatus corresponding to the command, based on the direction in which the remote controller 10a of transmitting the first remote control signal are oriented. The controller 200 may be configured to determine the orientation directions of the remote controller 10a based on the information about the orientation direction received from the external sensor or the remote controller 10a. When receiving the first remote control signal, the controller 200 performs a function corresponding to the command received from the remote controller 10a if it is determined that the apparatus indicated by the remote controller 10a is the display apparatus 1. The controller 200 generates and transmits the second remote control signal involving the command to an external apparatus 2a selected based on the direction indicated by the remote controller 10a if it is determined that the apparatus indicated by the remote controller 10a is the external apparatus 2a.

As another example, the controller 200 may be configured to select the apparatus corresponding to the command based on a period during which the first remote control signal is transmitted or based on the number of times by which the first remote control signal is transmitted during a predetermined period. If a user presses a key of the remote controller 10afor a predetermined period of time or more and thus the first remote control signal is received from the remote controller 10a for a predetermined period of time or more, the controller 200 may be configured to select the apparatus corresponding to the command based on a period during which the first remote control signal is received. Likewise, if a user repetitively presses a key of the remote controller 10a and thus the first remote control signal is repetitively received from the remote controller 10a for a predetermined period of time, the controller 200 may be configured to select the apparatus corresponding to the command based on the number of times by which the first remote control signal is received.

For example, the controller 200 may select the display apparatus 1 as the apparatus corresponding to the command if the first remote control signal is received for a predetermined period of time or less, and may select the first external apparatus 2a as the apparatus corresponding to the command if the remote control signal is continuously received for a predetermined period of time or more. Since there are a plurality of selectable external apparatuses 2a-2n, a predetermined period of time for each of the external apparatuses 2a-2n may be set to correspond to a plurality of levels.

Further, the controller 200 may select the display apparatus 1 as the apparatus corresponding to the command if the first remote control signal is received once for 3 seconds, and may select the second external apparatus 2b as the apparatus corresponding to the command if the remote control signal is received three times for 3 seconds. Like the period for which the first remote control signal is received, number of times for each of the plurality of external apparatuses 2a-2n may be also set to correspond to a plurality of levels.

The foregoing examples are provided merely for convenience and ease of description, and not intended to limit the present disclosure. Based on the period for which the first remote control signal is received and the number of times by which the first remote control signal is repetitively received, there may be various example embodiments of selecting the apparatus corresponding to the command.

As another example, if receiving the first remote control signal, the controller 200 may control the display 203 to display a Ul for allowing a user to determine a subject of performing a function. The controller 200 is configured to select an apparatus corresponding to a command based on a user's input received through the UI.

As another example, if the controller 200 analyzes the first remote control signal and determines that the first remote control signal involves a first command for temperature control of an air conditioner or the like, which is different from the function of the display apparatus 1 or the selected external apparatuses 2a, the controller 200 may match the first command involved in the received first remote control signal with the second command to be implemented in the display apparatus 1 or the external apparatus 2a. Specifically, the controller 200 matches a temperature control command for an air conditioner with a volume control command for a TV, matches a wind-speed control command for an electric fan with a channel switching command for a set-top box, and performs a function or transmits the command to the corresponding apparatus in accordance with the matched commands. The controller 200 matches the first command with the second command and controls the display 203 to show a user guide information including information about the second command.

Further, the controller 200 may be configured to select an apparatus corresponding to a command based on surrounding environmental information. The surrounding environmental information includes information about at least one among the current operations of the plurality of external apparatuses 2a-2n, the respective positons of the plurality of remote controllers 10a-10n, and the ambient temperature, sound and/or smell of the display apparatus 1.

For example, the controller 200 may be configured to select an apparatus corresponding to a command in accordance with whether the external apparatuses 2a-2n is currently operating or not. Specifically, if a command involved in the first remote control signal is related to power-on, the controller 200 transmits the second remote control signal involving the power-on command to an external apparatus, which is not operating, among the connected external apparatuses. Further, if a command involved in the first remote control signal is related to volume-up, the controller 200 transmits the second remote control signal involving the volume-up command to an external apparatus, which is operating, among connected external apparatuses.

As still another example, the controller 200 may select an apparatus corresponding to a command based on information about the position of the remote controller 10a-10n corresponding to each of the external apparatuses 2a-2n. The information about the positions of each of the remote controllers 10a-10n may be received from an external sensor or the external apparatuses 2a-2n. For instance, if a user uses a 'B' remote controller 10b corresponding to a 'B' apparatus 2b even though an 'A' remote controller 10a corresponding to an 'A' apparatus 2a is positioned close to the user, it may be determined that the user is weak of purpose to control the 'A' apparatus 2a. In addition, if a 'C' remote controller 10c corresponding to a 'C' apparatus 2C is not placed around the display apparatus 1, it does not mean that there is no intention of controlling the 'C' apparatus 2c even though a user uses the 'B' remote controller 10b.

As still another example, the controller 200 may select an apparatus corresponding to a command based on information about the ambient temperature, sound and/or smell of the display apparatus 1. For instance, if it is determined that the ambient temperature is moderate, the controller 200 matches the first command involved in the first remote control signal for lowering the temperature with the second command to be implemented in the display apparatus 1, and directly performs the function based on the second command or transmit the second command to the external apparatus 2a selected as the apparatus corresponding to the first command. Further, if it is determined that the ambient sound is too loud and the first remote control signal involving a volume-down command is received, the controller 200 selects the external apparatus 2a capable of controlling the currently output sound as an apparatus corresponding to the command and transmits the second remote control signal involving the volume-down command to the selected external apparatus 2a.

The controller 200 is configured to control various operations of the display apparatus 1 as described above. However, the operations described with reference to the accompanying drawings are simply given by way of example, and are not to be construed as limiting the functions of the controller 200. Further, the controller 200 may be achieved by a memory installed with various programs for performing operations and a plurality of processors. The plurality of processors may be also achieved by an integrated circuit (IC) or a system on chip (SOC), and thus each processor may play various roles on a chip without being provided as separate hardware.

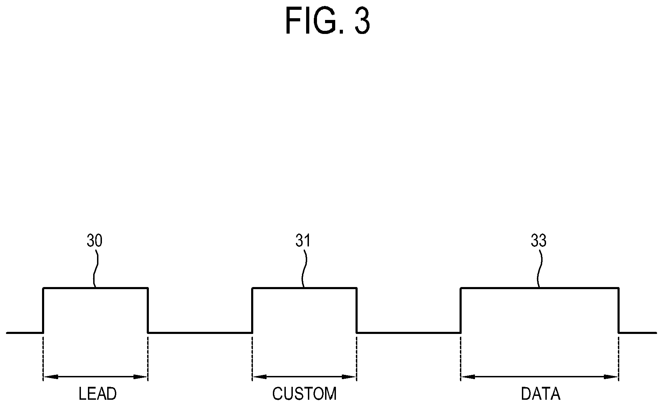

FIG. 3 is a diagram illustrating example remote control signal output from a remote controller.

A remote control signal output from a remote controller 10 may include, for example, an infrared (IR) signal. The IR signal may include a lead code 30, a custom code 31, and a data code 33. FIG. 3 illustrates the lead code 30, the custom code 31 and the data code 33 in sequence, but the sequence of the codes may be changeable.

The custom code 31 may include information about a manufacturer of the external apparatus 2 to be controlled by the remote controller 10. Further, the data code 33 includes information about a function of each key. For example, the data code 33 may include information about the functions of the keys such as a key corresponding to a numeral of '1', a key corresponding to volume-up, etc.

Since the custom code 31 and the data code 33 are varied depending on the external apparatus 2 or the manufacturer of the external apparatus 2, the controller 200 analyzes the remote control signal based on at least one of the custom code 31 and the data code 33, and determines the decoding type corresponding to the remote control signal.

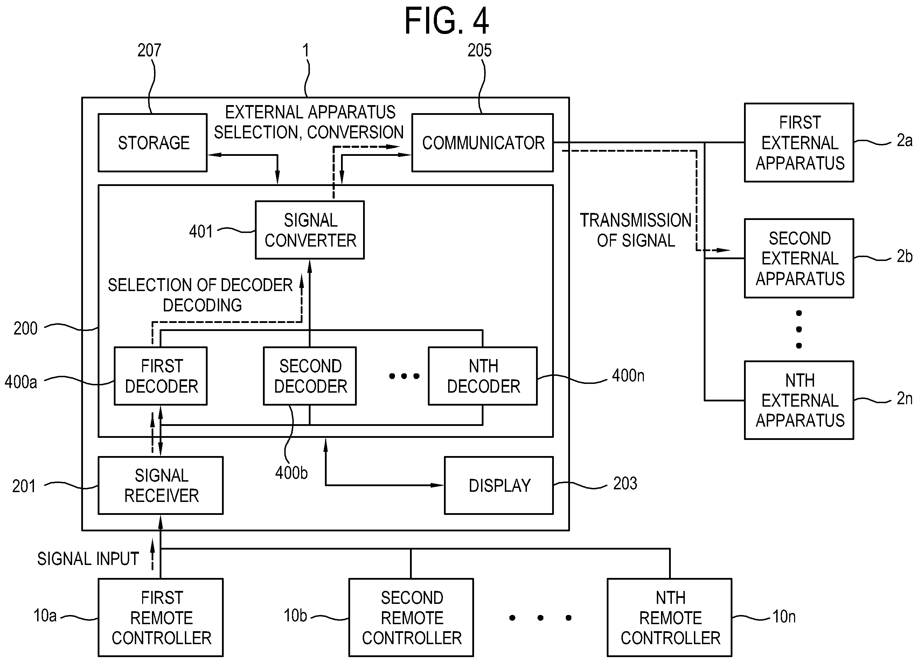

FIG. 4 is a block diagram illustrating example operations of a display apparatus according to an example embodiment.

The controller 200 determines the decoding type corresponding to the received first remote control signal among the plurality of decoding types stored in the storage 207 by analyzing the received first remote control signal, and decodes the received first remote control signal with the determined decoding type. To decode the received first remote control signal with the determined decoding type, and convert the command involved in the first remote control signal into the second remote control signal corresponding to the external apparatus 2a, the controller 200 may include a plurality of decoders 400a-400n corresponding to the plurality of decoding types and a signal converter 401.

If a user controls the remote controller 10a so that the first remote control signal can be received through the signal receiver 201, the controller 200 determines the decoding type corresponding to the received first remote control signal among the plurality of decoding types stored in the storage 207. The controller 200 employs a decoder 400a corresponding to the determined decoding type among the plurality of decoders 400a-400n to decode the received first remote control signal. The first remote control signal may include an IR signal, and thus the signal receiver 201 may be achieved by a universal IR signal receiver capable of receiving all IR signals according to various standards.

According to another example embodiment, if there are a plurality of decoding types corresponding to the received first remote control signal, the controller 200 may control the display 203 to display a UI for allowing a user to input for receiving the first remote control signal again. The controller 200 may be configured to analyze a secondary received first remote control signal and determine the decoding type corresponding to the first remote control signal.

According to still another example embodiment, if it is determined that there are no decoding types corresponding to the first remote control signal, the controller 200 may be configured to transmit information about the analyzed first remote control signal received in the external server though the communicator 205, and decode the received first remote control signal based on information about the decoding type received through the communicator 205.

After decoding the first remote control signal, the controller 200 selects an apparatus corresponding to a command involved in the first remote control signal based on preset conditions and/or surrounding environmental information. Based on the selection, the controller 200 performs the function corresponding to the command, or controls the signal converter 401 to convert the first remote control signal into the second remote control signal receivable in the external apparatus 2a selected as the apparatus corresponding to the command. Further, the converted signal is transmitted to the external apparatus 2a through the communicator 205.

The signal converter 401 is configured to generate the second remote control signal matching with the standards of the external apparatus 2a selected under control of the controller 200. The communicator 205 is configured to transmit the second remote control signal generated by the signal converter 401 to the selected external apparatus 2a.

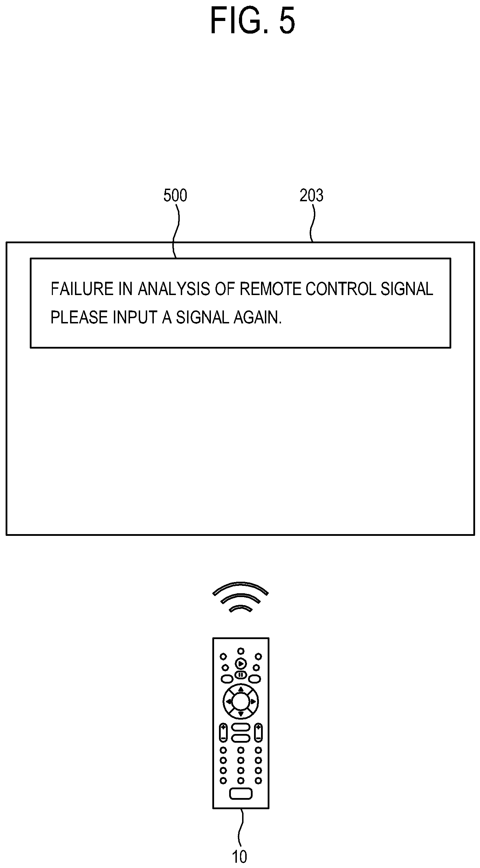

FIG. 5 is a diagram illustrating an example of a user interface (UI) displayed for allowing a user to input a remote control signal again according to an example embodiment.

Based on receiving the first remote control signal from the remote controller 10, the controller 200 determines the decoding type by analyzing the received first remote control signal, decodes the received first remote control signal based on the determined decoding type, and performs various operations based on the decoded first remote control signal.

However, a plurality of decoding types may be determined corresponding to the received first remote control signal due to errors caused by the limits of the signal or the electronic apparatus. If the decoding type corresponding to the first remote control signal is plurally determined, the controller 200 may have to receive the first remote control signal again in order to more correctly determine the decoding type corresponding to the received first remote control signal.

Thus, the controller 200 according to this example embodiment controls the display 203 to display a UI 500 for informing a user of failure of analyzing the remote control signal and allowing the user to makes an input for resending the first remote control signal again by the remote controller 10.

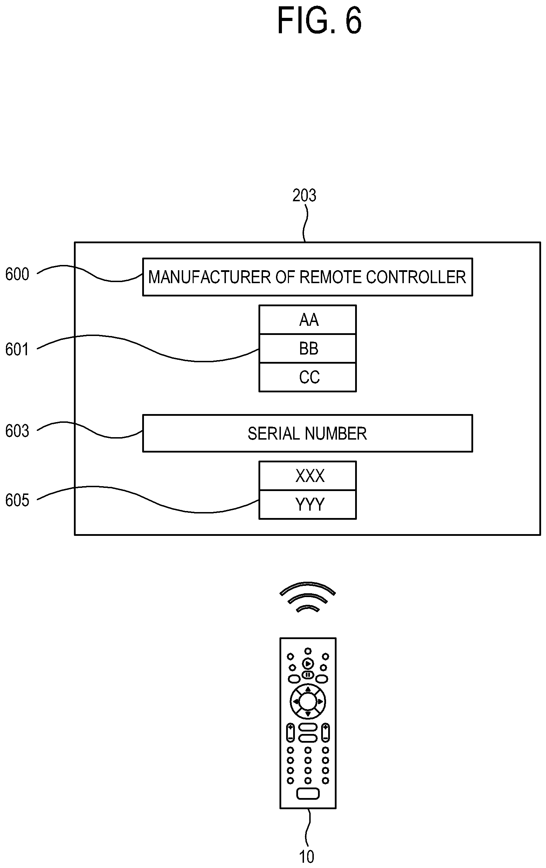

FIG. 6 is a diagram illustrating an example of a UI displayed for allowing a user to input information about a remote controller according to an example embodiment.

According to this example embodiment, the controller 200 may directly receive information about the remote controller from a user, and thus accurately determine the decoding type of the received first remote control signal.

The controller 200 may control the display 203 to display a UI for allowing a user to input information such as a manufacturer 600, a serial number 603, etc. of the remote controller 10. A user may select a manufacturer item 601 and a serial-number item 605 displayed on the UI, thereby inputting information about the remote controller 10.

The accompanying drawings and foregoing descriptions are merely given by way of example. Alternatively, the controller 200 may control the display 203 to display UIs variously configured to receive information about the remote controller 10 from a user.

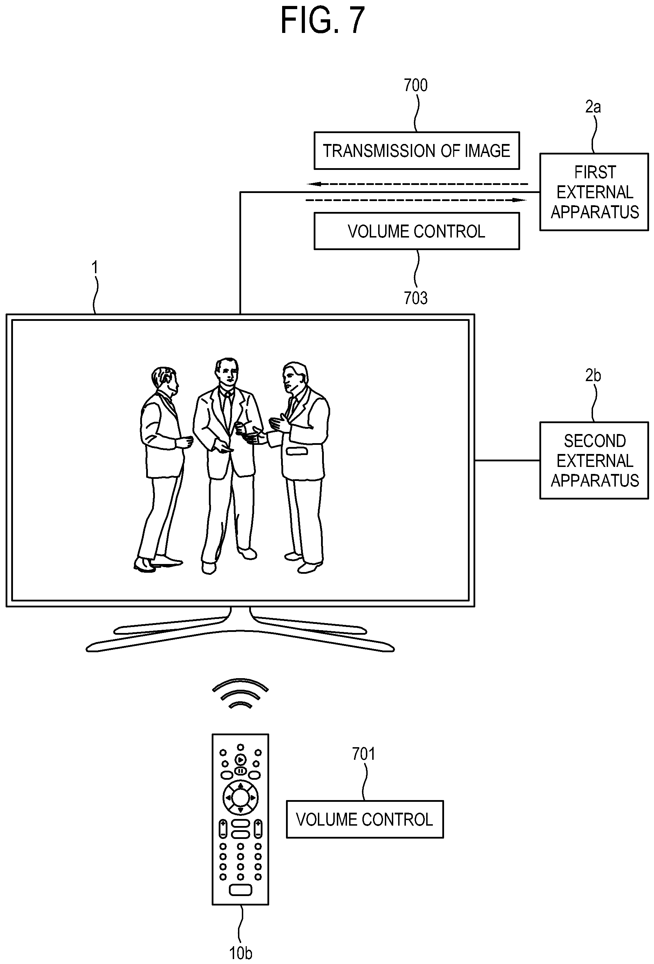

FIG. 7 is a diagram illustrating an example of operations of a display apparatus that transmits a command to an external apparatus selected based on an image displayed according to an example embodiment.

The controller 200 is configured to select an apparatus corresponding to a command based on an image displayed in response to the command involved in the first remote control signal when the first remote control signal is received from the remote controller 10b. That is, the controller 200 is configured to perform a function corresponding to the command, or control the communicator 205 to transmit the second remote control signal involving the command to the external apparatus 2a selected corresponding to the displayed image.

Referring to an example illustrated in FIG. 7, the display apparatus 1 is receiving and displaying an image 700 from the first external apparatus 2a. If a user makes an input of a volume control command 701 using the remote controller 10b, the display apparatus 1 receives the first remote control signal involving the volume control command 701 from the remote controller 10b.

Since the displayed image is being received from the first external apparatus 2a, the controller 200 controls the communicator 205 to output the second remote control signal involving the volume-control command 703 to the first external apparatus 2a.

According to another example embodiment, if an image (e.g. a popup image, an advertisement image, a picture in picture (PIP) image, etc.) generated by an internal operation of the display apparatus 1 is being displayed on the top even while the display apparatus 1 is receiving and displaying an image from the first external apparatus 2a, the controller 200 selects the display apparatus 1 as an apparatus corresponding to the command and performs a function corresponding to the command.

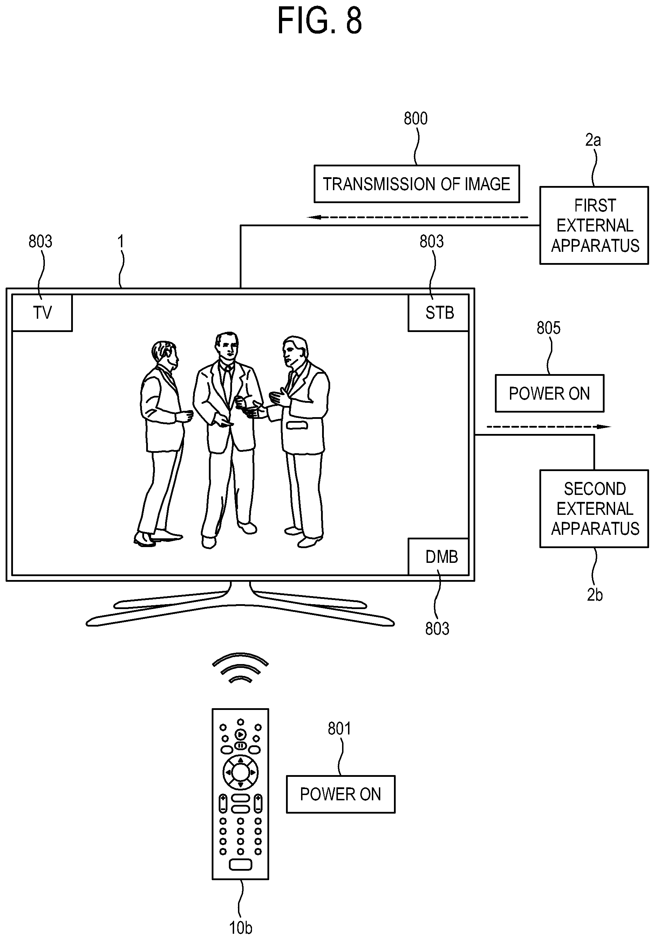

FIG. 8 is a diagram illustrating an example of operations of a display apparatus that transmits a command to an external apparatus selected based on a predetermined condition according to an example embodiment.

Based on receiving the first remote control signal from the remote controller 10b, the controller 200 selects an apparatus corresponding to the command based on a predetermined condition. For example, the controller 200 performs a function corresponding to a command involved in the first remote control signal, or controls the communicator 205 to transmit the second remote control signal involving the command to the selected external apparatus 2b.

Referring to an example illustrated in FIG. 8, the display apparatus 1 is receiving and displaying an image from the first external apparatus 2a. If a user makes an input of a power-on command 801 through the remote controller 10b, the display apparatus 1 receives the first remote control signal involving the power-on command 801 from the remote controller 10b.

Since the display apparatus 1 and the first external apparatus 2a supplying power to the display apparatus 1 are currently operating, the controller 200 controls the communicator 205 to output the second remote control signal involving the power-on command 805 to the second external apparatus 2b that is not operating.

According to another example embodiment, a user may directly determine a subject of carrying out the command. If receiving a command for powering on or off from a user using the remote controller 10b, the controller 200 controls the display 203 to display a UI including menu items 803 respectively corresponding to a plurality of apparatuses so that a user can select the subject of carrying out the received command. A user may directly select the subject of carrying out the input command by selecting one of the menu items 803. The controller 200 determines an apparatus corresponding to a command based on a user's selection, and directly performs a function of the command or controls the communicator 205 to transmit the second remote control signal involving the command to the selected external apparatus.

A user may select the menu item 803 by direct touch on the display 203 or by controlling a key pad of the remote controller 10b. Further, a user may select the menu item 803 by pointing it with the remote controller 10b. The controller 200 may determine which menu item 803 is indicated by the remote controller 10b based on information about the pointing direction received from the external sensor or a built-in sensor of the remote controller 10b.

According to still another example embodiment, the controller 200 may select an apparatus corresponding to a command in accordance with a pointing direction of the remote controller 10b. Unlike the menu item 803 of the UI, the controller 200 in this example embodiment is configured to select the external apparatus placed in the pointing direction of the remote controller 10b. The display apparatus 1 may receive pointing direction information, which include information about a direction indicated by the remote controller 10b and the external apparatus placed in the indicating direction, from the remote controller 10b or the external sensor.

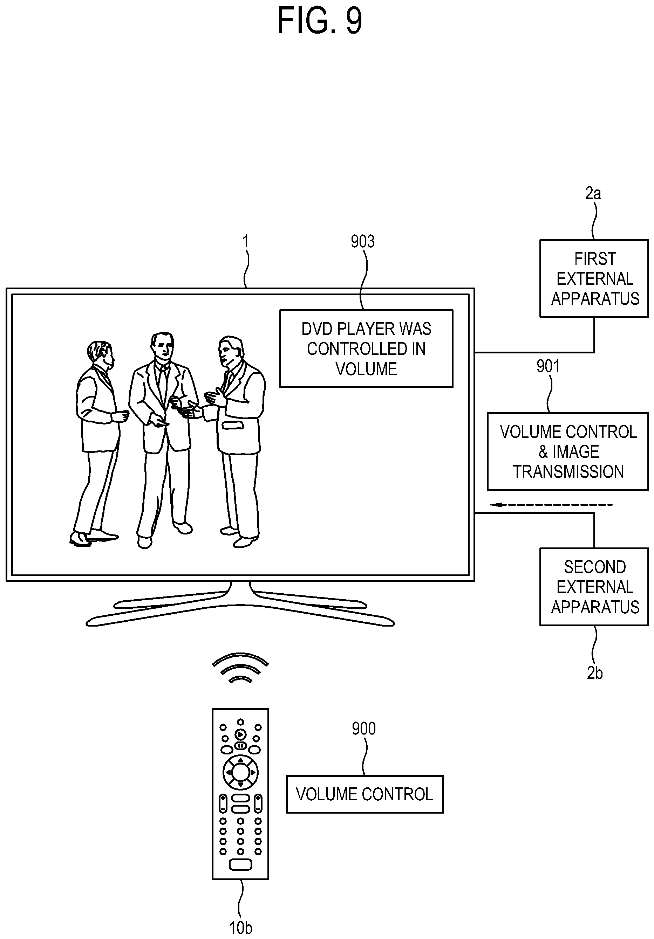

FIG. 9 is a diagram illustrating an example of a display apparatus that performs operations based on operations of an external apparatus that receives a remote control signal according to an example embodiment.

If receiving the first remote control signal from the remote controller 10b, the controller 200 selects an apparatus corresponding to a command in accordance with a displayed image. Based on the selection, the controller 200 carries out the command or transmits the second remote control signal involving the command to the selected external apparatus 2b. However, the external apparatus 2b may directly receive the first remote control signal from the corresponding remote controller 10b before receiving the second remote control signal from the display apparatus 1. Accordingly, the controller 200 does not output the second remote control signal and informs a user that the function is implemented, if it is determined that the function corresponding to the command has been carried out in the external apparatus 2b before outputting the second remote control signal.

Referring to an example of FIG. 9, the display apparatus 1 is receiving and displaying an image from the second external apparatus 2b. If a user makes an input of a volume control command 900 using the remote controller 10b for controlling the volume of a sound output from the display apparatus 1, the display apparatus 1 and the second external apparatus 2b receives the first remote control signal involving the volume control command 900 from the remote controller 10b. If an image 901, the volume of which has been controlled, is received from the second external apparatus 2b, the controller 200 may be configured to display a Ul 903 for informing that the volume has already been controlled, without transmitting the second remote control signal involving the volume control command 900 to the second external apparatus 2b.

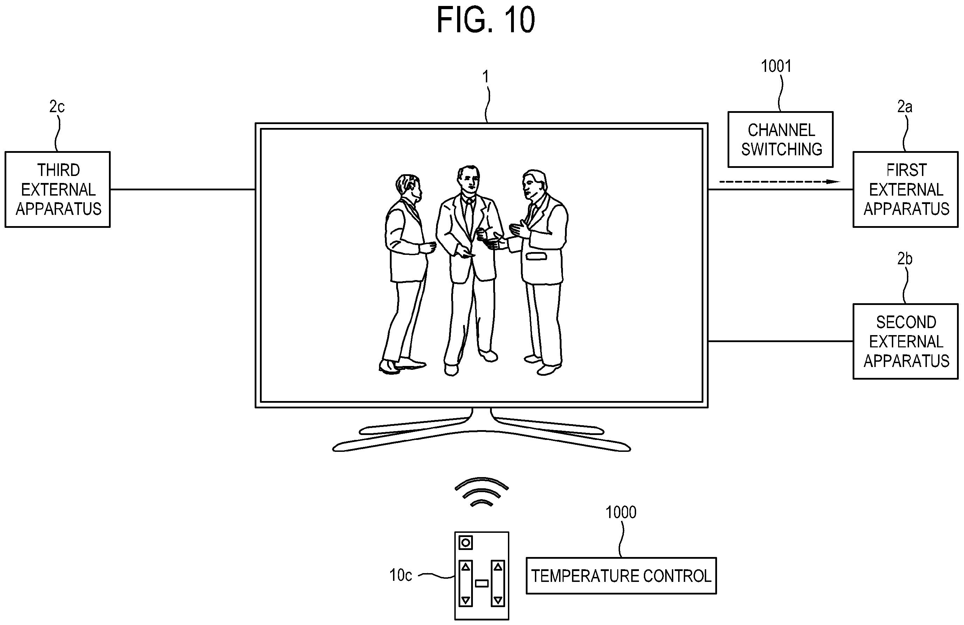

FIG. 10 is a diagram illustrating an example of operations of a display apparatus that operates when receiving a remote control signal from a remote controller regardless of functions of the display apparatus according to an example embodiment.

The first remote control signal may involve a first command regardless of functions, which can be performed in the display apparatus 1, like a temperature control command 1000 of an air conditioner 2c. In this case, the controller 200 selects the external apparatus 2c, which can carry out the first command involved in the first remote control signal, as an apparatus matching with the first command, and converts the first remote control signal into the second remote control signal involving the first command, thereby transmitting the second remote control signal to the selected external apparatus 2c. However, the controller 200 may select not the external apparatus 2c capable of carrying out the first command involved in the first remote control signal but the display apparatus 1 or another external apparatus 2a as an apparatus corresponding to the first command in accordance with various conditions or received environmental information. In this case, the controller 200 matches the first command involved in the received first remote control signal with the second command that can be performed in the display apparatus 1 or the selected external apparatus 2a. In the case where the display apparatus 1 is selected as an apparatus corresponding to the first command, the controller 200 performs a function in accordance with the second command. Further, in the case where the external apparatus 2a is selected as an apparatus corresponding to the first command, the controller 200 may be configured to transmit the second remote control signal involving the second command to the external apparatus 2a.

Referring to an example illustrated in FIG. 10, when a user makes an input of the temperature control command 1000 through the remote controller 10c for the air conditioner, the display apparatus 1 receives the first remote control signal involving the temperature control command 1000. If it is determined that there is a need of temperature control, the display apparatus 1 transmits the temperature control command 1000 to the air conditioner 2c. However, in this example embodiment, the display apparatus 1 determines that there are no needs of the temperature control, and matches the temperature control command 100 with a channel switching command 1001, thereby transmitting the second remote control signal involving the channel switching command 1001 to the first external apparatus 2a that is currently transmitting an image to the display apparatus 1. Here, the display apparatus 1 determines whether the temperature control is required or not based on the surrounding environmental information received from the outside.

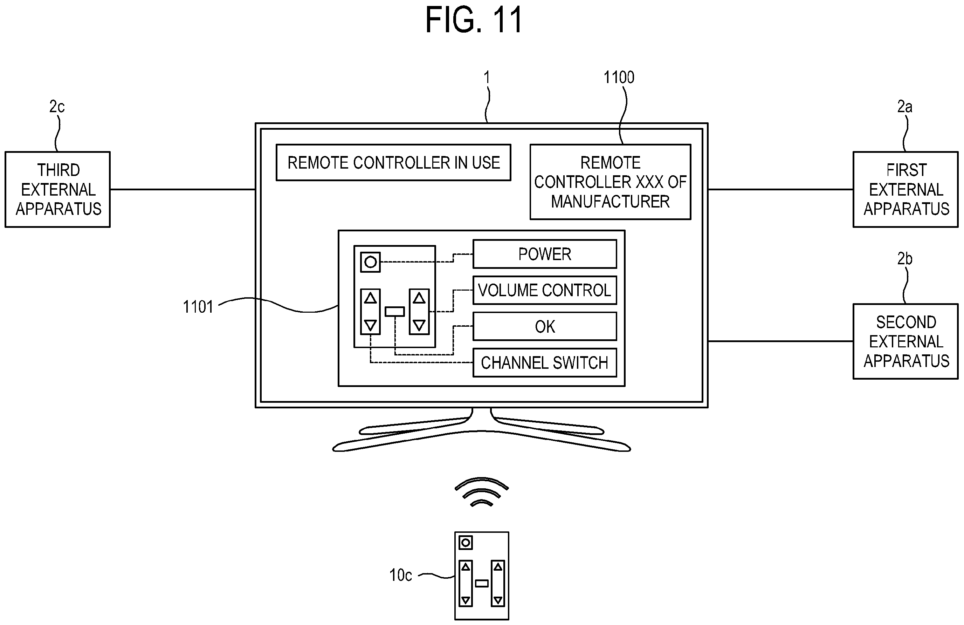

FIG. 11 is a diagram illustrating an example of operations of a display apparatus that provides guide information to a user by analyzing a remote control signal according to an example embodiment.

As described above with reference to FIG. 10, if the command involved in the received first remote control signal is regardless of the functions that can be performed in the display apparatus 1, the controller 200 matches the first command involved in the first remote control signal with the second command that can be performed in the display apparatus 1 or another external apparatus 2a 2b, and performs a function in accordance with the matching second command or transmits the second command to the external apparatus 2a-2b.

In this case, the controller 200 controls the display 203 to display guide information for a user with regard to the first command and the second command. The guide information includes information 1100 about the remote controller 10c, and information 1101 about the second command.

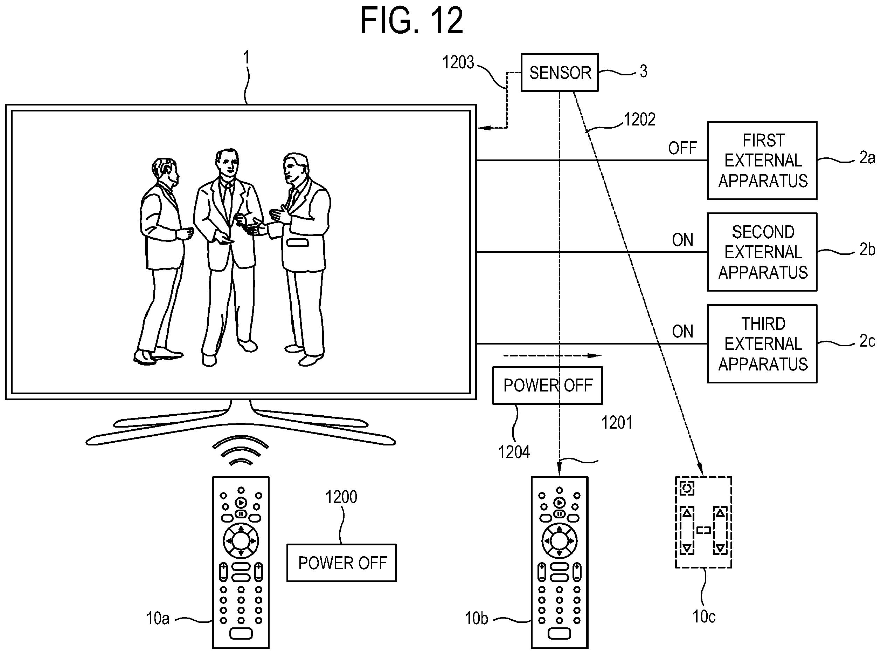

FIG. 12 is a diagram illustrating an example of operations of a display apparatus that transmits a command to an external apparatus selected based on surrounding environmental information according to an example embodiment.

If receiving the first remote control signal, the controller 200 selects an apparatus corresponding to a command involved in the first remote control signal based on the surrounding environmental information. In accordance with selection, the controller 200 performs a function corresponding to the command or controls the communicator 205 to transmit the second remote control signal involving the command to the selected external apparatus 2c. The surrounding environmental information includes information about at least one operation of the external apparatus, positions of the remote controller 10a-10c, and ambient temperature, sound and/or smell.

Referring to FIG. 12, if a user makes an input of a power-off command 1200 through the remote controller 10a of the first external apparatus 2a, the display apparatus 1 receives the first remote control signal involving the power-off command 1200. An external sensor 3 senses that the second remote controller 10b corresponding to the second external apparatus 2b is near (1201), senses the third remote controller 10c corresponding to the third external apparatus 2c is not near (1202), and transmitting information about the positions of the second and third remote controllers 10b and 10c to the display apparatus 1 (1203). Through the communication, the display apparatus 1 checks that the first external apparatus 2a has already been turned off. Since the first external apparatus 2a has already been turned off and the power-off command is issued through the remote controller 10a of the first external apparatus 2a even though the remote controller 10b of the second external apparatus 2b that is currently transmitting an image is near, the display apparatus 1 determines that the command is intended to stop the operations of the third external apparatus 2c that is operating, thereby transmitting the power-off command 1204 to the third external apparatus 2c.

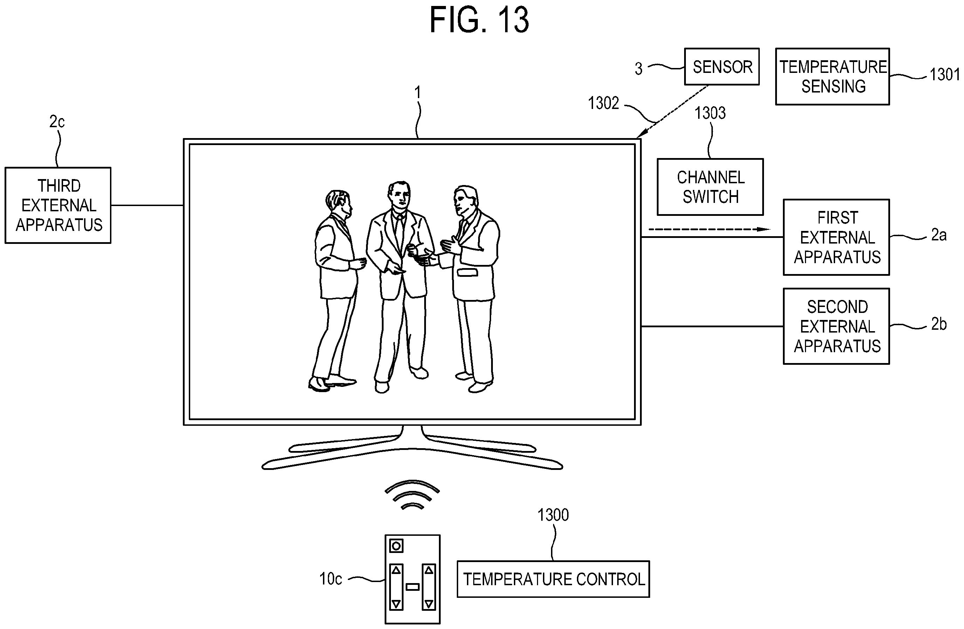

FIG. 13 is a diagram illustrating an example of operation of a display apparatus that transmits a command to an external apparatus selected based on surrounding environmental information according to an example embodiment.

Referring to FIG. 13, if a user makes an input of a temperature control command 1300 through the remote controller 10c of the air conditioner 2c in order to lower temperature, the display apparatus 1 receives the first remote control signal involving the temperature control command 1300. The external sensor 3 senses ambient temperature (1301), and transmits information about the sensed temperature to the display apparatus 1 (1302). If it is determined that the ambient temperature is low enough and there are no needs of controlling the air conditioner 2c, the display apparatus 1, the temperature control command 1300 for lowering the temperature may be matched with the channel switching command. Thus, the display apparatus 1 transmits the second remote control signal involving the channel switching command 1303 to the first external apparatus 2a that is transmitting an image. On the other hand, if it is determined that the ambient temperature is excessively high and the air conditioner 2c is operating, the second remote control signal involving the temperature control command 1300 is transmitted to the air conditioner 2c.

According to another example embodiment, the sensor 3 may sense an ambient sound. If a sound output from another external apparatus 2a-2b is excessively loud, the display apparatus 1 may transmit the second remote control signal involving a user's volume-down command to the external apparatus 2a-2b that is making noise.

According to still another example embodiment, the sensor 3 may sense an ambient smell. If the sensor 3 senses a foul smell, the display apparatus 1 receives information about the smell from the sensor 3 and then transmits the second remote control signal involving a user's power-on command to an air cleaner.

The accompanying drawings and foregoing detailed descriptions are just given by way of example. Thus, there may be various example embodiments where the display apparatus 1 generates the control signal by sensing a surrounding environment, or determined a subject of performing a function corresponding to a command based on the surrounding environmental information received from the outside.

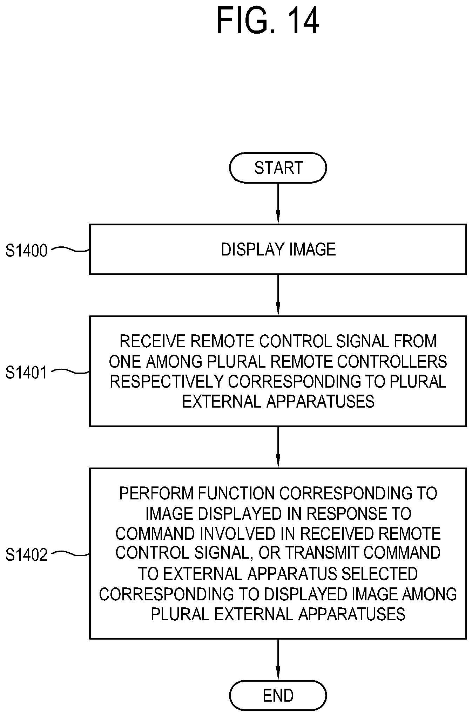

FIG. 14 is a flowchart illustrating an example method of operating a display apparatus according to an example embodiment. First, at operation S1400, the display apparatus 1 displays an image based on an image signal received from the outside. Further, at operation S1401, the display apparatus 1 receives a remote control signal from one among the plurality of remote controllers respectively corresponding to a plurality of external apparatuses. Last, at operation S1402, the display apparatus 1 performs a function corresponding to the image displayed in response to the command involved in the received remote control signal, or transmits the command to an external apparatus selected corresponding to the displayed image among the plurality of external apparatuses.

According to an example embodiment, the remote controller matching with the external apparatus can be used to control the display apparatus or another external apparatus, thereby improving a user's convenience.

Although various example embodiments have been illustrated and described, it will be appreciated by those skilled in the art that changes may be made in these example embodiments without departing from the principles and spirit of the disclosure, the scope of which is defined in the appended claims and their equivalents.

## Claims

1. A display apparatus comprising:
a display configured to display an image;
a communicator comprising communication circuitry;
a signal receiver configured to receive a remote control signal from at least one among a plurality of remote controllers respectively corresponding to a plurality of external apparatuses; and
a controller configured to perform a function corresponding to an image displayed on the display in response to a command included in the received remote control signal, or to control the communicator to transmit the command to an external apparatus selected based on the image displayed on the display among the plurality of external apparatuses.

2. The display apparatus according to claim 1, wherein the controller is configured to generate a first remote control signal including the command to match the selected external apparatus, and to control the communicator to output the generated first remote control signal.

3. The display apparatus according to claim 1, further comprising a storage configured to store a plurality of decoding types,
wherein the controller is configured to determine a decoding type corresponding to the remote control signal from among the plurality of decoding types by analyzing a characteristic of the remote control signal.

4. The display apparatus according to claim 3, wherein the controller is configured to control the display to display a user interface (UI) allowing a remote control signal be transmitted again based on a plurality of decoding types corresponding to the received remote control signal being detected.

5. The display apparatus according to claim 3, wherein, the controller is configured to control the communicator to transmit the characteristic of the analyzed remote control signal to an external server and to determine a decoding type received from the external server as a decoding type corresponding to the received remote control signal based on a decoding type corresponding to the received remote control signal not being detected from among the plurality of decoding types.

6. The display apparatus according to claim 3, wherein, the controller is configured to control the display to display a user interface (UI) for receiving an input of information about the kinds of remote controller based on a decoding type corresponding to the received remote control signal not being detected from among the plurality of decoding types.

7. The display apparatus according to of claim 1, wherein the controller is configured to perform a function corresponding to a command included in the remote control signal based on a predetermined condition, or to control the communicator to transmit the command to an external apparatus selected based on the predetermined condition from among the plurality of external apparatuses.

8. The display apparatus according to claim 1, wherein, the controller is configured to control the display to display a user interface (UI) for allowing a user to select a subject of performing the function, and to perform the function based on the input made through the UI or to control the communicator to transmit the command to at least one external apparatus selected through the UI based on receiving the remote control signal.

9. The display apparatus according to claim 1, wherein the controller is configured to perform a function corresponding to the command based on surrounding environmental information, or to control the communicator to transmit the command to at least one external apparatus selected based on the surrounding environmental information from among the plurality of external apparatuses.

10. A method of controlling a display apparatus, the method comprising:
displaying an image;
receiving a remote control signal from at least one among a plurality of remote controllers respectively corresponding to a plurality of external apparatuses; and
performing a function corresponding to the displayed image in response to a command included in the received remote control signal, or transmitting the command to an external apparatus selected based on the displayed image from among the plurality of external apparatuses.

11. The method according to claim 10, wherein the transmitting the command to an external apparatus selected based on the displayed image from among the plurality of external apparatuses comprises:
generating a first remote control signal including the command to match with the selected external apparatus; and
outputting the generated first remote control signal.

12. The method according to claim 10, further comprising:
storing a plurality of decoding types; and
determining a decoding type corresponding to the remote control signal from among the plurality of decoding types by analyzing a characteristic of the remote control signal.

13. The method according to claim 12, wherein the determining the decoding type comprises:
displaying a user interface (UI) for allowing a remote control signal to be transmitted again if a plurality of decoding types corresponding to the received remote control signal are detected.

14. The method according to claim 12, wherein the determining the decoding type comprises:
displaying a user interface (UI) for receiving an input of information about the kinds of remote controller based on a decoding type corresponding to the received remote control signal not being detected from among the plurality of decoding types.

15. The method according to claim 10, further comprising:
displaying a user interface (UI) for allowing a user to select a subject of performing the function based on receiving the remote control signal; and
performing the function based on the input made through the Ul or transmitting the command to the at least one external apparatus selected through the UI.
